# EUROPEAN PATENT APPLICATION

(11) **EP 3 549 971 A1**
(43) Date of publication of application: **09.10.2019**
(21) Application number: 17876035.1
(22) Date of filing: 16.11.2017
(51) Int. Cl.: C08G 69/40

(54) **TERMINALLY MODIFIED POLYAMIDE RESIN**

(30) Priority: 29.11.2016 JP 2016230878
(71) Applicant: Toray Industries, Inc., Tokyo 103-8666 (JP)
(72) Inventor: SUDO, Ken, Nagoya-shi Aichi 455-8502 (JP); UTAZAKI, Kenichi, Nagoya-shi Aichi 455-8502 (JP)
(74) Representative: Prüfer & Partner mbB Patentanwälte · Rechtsanwälte
(86) International application number: PCT/JP2017/041196
(87) International publication number: WO 2018/101054

(57) **Abstract**

This terminally modified polyamide resin has a terminal structure represented by general formula (I), wherein the terminal structure represented by general formula (I) is contained at a quantity of 1-10 mass% relative to 100 mass% of the terminally modified polyamide resin, the weight average molecular weight / content [mass%] ratio of the terminal structure represented by general formula (I) is 6,000-20,000, and the melt viscosity at a temperature corresponding to melting point+60°C and at a shear rate of 9728 sec⁻¹ is 0.1-8 Pa·s. General formula (I): -X-(R¹-O)m-R² (I) (In general formula (I), m denotes the range 2-100. R¹ denotes a divalent hydrocarbon group having 2-10 carbon atoms, and R² denotes H or a monovalent organic group. -X-denotes -NH-, -N(CH₃)-, -(C=O)- or -CH₂-CH (OH) -CH₂-O-. The number m of R¹ groups contained in general formula (I) may be the same as, or different from, each other.)

## Description

### TECHNICAL FIELD

The present invention relates to an end modified polyamide resin which has a specific end structure and which has a low melt viscosity and excellent molding processability, and affords molded articles excellent in mechanical strength.

### BACKGROUND ART

Polyamide resins are excellent in mechanical characteristic, thermal characteristic and the like, and are therefore widely used as materials for various molded articles such as fibers, various containers, films, electric components, electronic components, automobile components and machine components.

In recent years, demands for miniaturization, complication, thinning and weight reduction of molded articles have been increased, and development of a material excellent in molding processability and excellent in mechanical characteristic is required. In addition, from the viewpoint of lowering a molding processing temperature and shortening a molding cycle, improvement of molding processability that contributes to reduction of environmental loading and reduction of energy costs is required. In general, an increase in molecular weight of a polyamide resin is known to improve the mechanical characteristic, but also has the effect of increasing the melt viscosity of the polyamide resin, resulting in deterioration of molding processability. When the molding processing temperature is increased, the melt viscosity can be reduced, but there is the problem that the mechanical characteristic and the appearance of a molded article are deteriorated because thermal stability is deteriorated, leading to occurrence of thermal decomposition that causes molecular weight reduction and gas generation during molding processing.

As a method for improving the thermal stability of a polyamide resin, for example, a method has been suggested in which thermal decomposition from the end of the polyamide resin is suppressed by blocking the amino end group and the carboxyl end group of the polyamide resin using acetic acid and diazomethane, respectively (see Non-Patent Document 1).

In addition, as a polyamide resin excellent in mechanical properties and fluidity, a polyamide resin which contains a hydrocarbon group having 6 to 22 carbon atoms and has a relative viscosity of 2 or more and less than 2.5 has been suggested (see Patent Document 1). In addition, as a high-molecular-weight end modified polyamide resin having excellent molding processability and excellent crystallinity, an end modified polyamide resin containing 0.5 to 4.5% by mass of a specific end structure and having a relative viscosity ηr of 2.1 to 10 has been suggested (see Patent Document 2).

### PRIOR ART DOCUMENTS

### PATENT DOCUMENTS

Patent Document 1: Japanese Patent Laid-open Publication No. 6-145345
Patent Document 2: PCT International Publication No. 2015/182693

### NON-PATENT DOCUMENT

Non-Patent Document 1: "Journal of polymer science (J. Polym. Sci.)", PRAGUE SYMPOSIUM, 1958, Vol. 30, p. 459-478

### SUMMARY OF THE INVENTION

### PROBLEMS TO BE SOLVED BY THE INVENTION

According to the technique described in Non-Patent Document 1, thermal stability of the polyamide resin can be improved to increase the molding processing temperature, but there is the problem that the melt viscosity is still high, and molding processability is insufficient in view of demands for miniaturization, complication, thinning and weight reduction of molded articles in recent years.

There is the problem that the polyamide resin described in Patent Document 1 still has a high melt viscosity, and insufficient molding processability in view of demands for miniaturization, complication, thinning and weight reduction of molded articles in recent years. Further, the end modified polyamide resin suggested in Patent Document 2 has a reduced melt viscosity because a polyalkylene oxide structure is introduced to only the end of the polyamide resin. However, for meeting the demand for downsizing of molded articles in recent years, it is required to further reduce the melt viscosity, and improve mechanical strength and molding processability.

Thus, an object of the present invention is to provide an end modified polyamide resin which has a low melt viscosity and excellent molding processability, and affords molded articles excellent in mechanical strength.

### SOLUTIONS TO THE PROBLEMS

The inventors of the present invention have extensively conducted studies for ensuring that a polyamide resin has a low melt viscosity and affords molded articles having mechanical strength, and as a result, it has been found that when the polyamide resin has a specific amount of a specific polyalkylene oxide structure at the end of the polyamide resin, a ratio of a weight average molecular weight to the content of the end structure is in a specific range, and the polyamide resin has a specific melt viscosity, the above-mentioned object can be achieved, leading to attainment of the present invention.
[1] An end modified polyamide resin having an end structure represented by the following general formula (I), wherein a content of the end structure represented by the following general formula (I) is 1 to 10% by mass based on 100% by mass of the end modified polyamide resin, a ratio of a weight average molecular weight Mw to the content [% by mass] of the end structure represented by the following general formula (I) (ratio of weight average molecular weight/content of end structure represented by the following general formula (I)) is 6,000 or more and 20,000 or less, and a melt viscosity is 0.1 Pa·s or more and 8 Pa·s or less at a temperature higher than a melting point by +60°C and a shear rate of 9728 sec⁻¹:

   -X- (R¹-O)ₘ-R² (I)

   wherein m represents 2 to 100; R¹ represents a divalent hydrocarbon group having 2 to 10 carbon atoms, and R² represents H or a monovalent organic group; -X- represents -NH-, -N(CH₃)-, -(C=O)- or -CH₂-CH(OH)-CH₂-O-; and m R¹s in the general formula (I) may be the same or different.
[2] The end modified polyamide resin according to [1], wherein the end modified polyamide resin further contains 0.1 to 5% by mass of an end structure represented by the following general formula (II).

   -Y-R³ (II)

   wherein R³ represents a monovalent hydrocarbon group having 1 to 30 carbon atoms; and -Y- in the general formula (II) represents -(C=O)- when X in the general formula (I) is - NH- or -N(CH₃)-, Y in the general formula (II) represents - NH- or -N(CH₃)- when X in the general formula (I) is - (C=O)-.
[3] The end modified polyamide resin according to [1] or [2], wherein in the general formula (I), R² is a monovalent hydrocarbon group having 1 to 30 carbon atoms.
[4] The end modified polyamide resin according to any one of [1] to [3], wherein when observed with an electron microscope, a cross-section of a molded article including the end modified polyamide resin has continuous phases formed by a main chain of the end modified polyamide resin and the non-end modified polyamide resin, and dispersed phases formed by the end structure represented by the general formula (I), and the dispersed phases have an average particle diameter of 10 nm or more and 50 nm or less.
[5] The end modified polyamide resin according to any one of [1] to [4], wherein the end modified polyamide resin contains an amino end group in an amount of 10 to 80 [mol/t].
[6] The end modified polyamide resin according to any one of [1] to [5], wherein the weight average molecular weight Mw is 18,000 to 30,000.
[7] A molded article including the end modified polyamide resin set forth in [1] to [6].

### EFFECTS OF THE INVENTION

According to the present invention, it is possible to obtain an end modified polyamide resin which has a low melt viscosity and excellent molding processability, and affords molded articles excellent in mechanical strength.

### EMBODIMENTS OF THE INVENTION

An end modified polyamide resin of the present invention, and a method for producing the end modified polyamide resin will now be described.

The end modified polyamide resin of the present invention has an end structure represented by the following general formula (I). The content of the end structure represented by the following general formula (I) is 1 to 10% by mass based on 100% by mass of the end modified polyamide resin, the ratio of a weight average molecular weight Mw to the content [% by mass] of the end structure represented by the following general formula (I) (ratio of weight average molecular weight/content of end structure represented by the following general formula (I)) is 6,000 or more and 20,000 or less, and the melt viscosity is 0.1 Pa·s or more and 8 Pa·s or less at a temperature higher than a melting point by +60°C and a shear rate of 9728 sec⁻¹.

-X- (R¹-O)ₘ-R² (I)

wherein m represents 2 to 100; R¹ represents a divalent hydrocarbon group having 2 to 10 carbon atoms, and R² represents H or a monovalent organic group; -X- represents -NH-, -N(CH₃)-, -(C=O)- or -CH₂-CH(OH)-CH₂-O-; and m R¹s in the general formula (I) may be the same or different.

The end modified polyamide resin of the present invention is a polyamide resin which can be obtained using at least one selected from an amino acid, a lactam and a "mixture of a diamine and a dicarboxylic acid" as a main raw material. The end modified polyamide resin has an end structure represented by the general formula (I). In other words, the end modified polyamide resin in the present invention is a polyamide resin which can be obtained using at least one selected from an amino acid, a lactam and a combination of a diamine and a dicarboxylic acid" as a main raw material. The end modified polyamide resin has an end structure represented by the general formula (I).

As a chemical structure that forms a main structural unit of the polyamide resin, one having 4 to 20 carbon atoms is preferably used when an amino acid or a lactam is used as a raw material. When a diamine and a dicarboxylic acid are used as raw materials, the number of carbon atoms of the diamine is preferably in a range of 2 to 20, and the number of carbon atoms of the dicarboxylic acid is preferably in a range of 2 to 20. Typical examples of the raw material are as follows.

Specific examples include amino acids such as 6-aminocaproic acid, 11-aminoundecanoic acid, 12-aminododecanoic acid and paraaminomethylbenzoic acid; lactams such as ε-caprolactam, ω-undecane lactam and ω-laurolactam; aliphatic diamines such as ethylenediamine, trimethylenediamine, tetramethylenediamine, pentamethylenediamine, hexamethylenediamine, heptamethylenediamine, octamethylenediamine, nonamethylenediamine, decanediamine, undecanediamine, dodecanediamine, tridecanediamine, tetradecanediamine, pentadecanediamine, hexadecanediamine, heptadecanediamine, octadecanediamine, nonadecanediamine, eicosanediamine, 2-methyl-1,5-diaminopentane and 2-methyl-1,8-diaminooctane, cycloaliphatic diamines such as cyclohexanediamine, bis-(4-aminocyclohexyl)methane and bis(3-methyl-4-aminocyclohexyl)methane; aromatic diamines such as xylylenediamine; aliphatic dicarboxylic acids such as oxalic acid, malonic acid, succinic acid, glutaric acid, adipic acid, suberic acid, azelaic acid, sebacic acid, undecanedioic acid and dodecanedioic acid, aromatic dicarboxylic acids such as terephthalic acid, isophthalic acid, 2-chloroterephthalic acid, 2-methylterephthalic acid, 5-methylisophthalic acid, 5-sodiumsulfoisophthalic acid, hexahydroterephthalic acid and hexahydroisophthalic acid, cycloaliphatic dicarboxylic acids such as cyclohexanedicarboxylic acid, dialkyl esters; and dichlorides of the dicarboxylic acid.

In the present invention, a polyamide homopolymer or copolymer derived from a raw material as described above can be used. Two or more of polyamides may be mixed to form a polyamide resin. In the present invention, from the viewpoint of further improving the mechanical characteristic and thermal stability at melt retention, the content of structural units derived from the raw material shown above is preferably 80 mol% or more, more preferably 90 mol% or more, still more preferably 100 mol% based on 100 mol% of all structural units that form the polyamide resin excluding the end structure represented by the general formula (I) and the end structure represented by the general formula (I) and the general formula (II) described later. In addition, the polymeric structure derived from the raw material shown above is preferably linear.

Examples of the polyamide homopolymer or copolymer obtained using the above-described raw material include polycaproamide (polyamide 6), polyundecaneamide (polyamide 11), polydodecaneamide (polyamide 12), polyhexamethylene adipamide (polyamide 66), polytetramethylene adipamide (polyamide 46), polypentamethylene adipamide (polyamide 56), polytetramethylene sebacamide (polyamide 410), polypentamethylene sebacamide (polyamide 510), polyhexamethylene sebacamide (polyamide 610), polyhexamethylene dodecamide (polyamide 612), polydecamethylene sebacamide (nylon 1010), polydecamethylene dodecamide (nylon 1012), polymethaxylylene adipamide (MXD 6), polymethaxylylene sebacamide (MXD 10), polyparaxylylene sebacamide (PXD 10), polynonamethylene terephthalamide (nylon 9T), polydecamethylene terephthalamide (polyamide 10T), polyundecamethylene terephthalamide (polyamide 11T), polydodecamethylene terephthalamide (polyamide 12T), polypentamethylene terephthalamide/polyhexamethylene terephthalamide copolymer (polyamide 5T/6T), poly-2-methylpentamethylene terephthalamide/polyhexamethylene terephthalamide (polyamide M5T/6T), polyhexamethylene adipamide/polyhexamethylene terephthalamide copolymer (polyamide 66/6T), polyhexamethylene adipamide/polyhexamethylene isophthalamide copolymer (polyamide 66/61), polyhexamethylene adipamide/polyhexamethylene terephthalamide/polyhexamethylene isophthalamide (polyamide 66/6T/6I), polybis(3-methyl-4-aminocyclohexyl)methane terephthalamide (polyamide MACMT), polybis(3-methyl-4-aminocyclohexyl)methane isophthalamide (polyamide MACMI), polybis(3-methyl-4-aminocyclohexyl)methanedodecamide (polyamide MACM 12), polybis(4-aminocyclohexyl)methane terephthalamide (polyamide PACMT), polybis(4-aminocyclohexyl)methane isophthalamide (polyamide PACMI) and polybis(4-aminocyclohexyl)methane dodecamide (polyamide PACM12).

Two or more of these polyamide homopolymers or copolymers can be used depending on required characteristics such as heat resistance, toughness and surface properties.

As especially preferred polyamide homopolymers or copolymers, polyamide 6, polyamide 66, polyamide 56, polyamide 410, polyamide 510, polyamide 610, polyamide 6/66, polyamide 6/12, polyamide 9T and polyamide 10T are preferably used.

The end modified polyamide resin of the present invention has an end structure represented by the following general formula (I). Examples may include end modified polyamide resins having an end structure represented by the following general formula (I) as a structural unit derived from a raw material for the polyamide resin. Examples may include end modified polyamide resins having a structure represented by the general formula (I) at the end of the polyamide resin.

Since the end structure represented by the following general formula (I) has an alkylene oxide structure, the resulting polymer has high molecular mobility, and is excellent in affinity with an amide group. The end structure situated at the end of the polyamide resin and represented by the following general formula (I) intervenes between polyamide molecular chains, so that the free volume of the polymer is increased, leading to reduction of entanglement. As a result, the molecular mobility of the polymer is considerably increased, so that the melt viscosity can be reduced, resulting in improvement of molding processability. Such an effect is much higher as compared to a case where the polyamide resin mainly has a polyalkylene oxide structure in the main chain.

-X- (R¹-O)ₘ-R² (I)

In the general formula (I), m represents 2 to 100. The effect of reducing the melt viscosity becomes insufficient as m decreases. m is preferably 5 or more, more preferably 8 or more, still more preferably 16 or more. On the other hand, when m is excessively large, heat resistance is insufficient. m is preferably 70 or less, more preferably 50 or less. From the viewpoint of maintaining characteristics derived from the main structural unit of the polyamide resin, it is preferable that the end modified polyamide resin has an end structure represented by the general formula (I) only at the end.

In the general formula (I), R¹ represents a divalent hydrocarbon group having 2 to 10 carbon atoms. From the viewpoint of affinity with the main structural unit of the polyamide resin, R¹ is preferably a hydrocarbon group having 2 to 6 carbon atoms, more preferably a hydrocarbon group having 2 to 4 carbon atoms. From the viewpoint of thermal stability and discoloration prevention of the end modified polyamide resin, R¹ is preferably a saturated hydrocarbon group.

Examples of R¹ include an ethylene group, a 1,3-trimethylene group, an isopropylene group, a 1,4-tetramethylene group, a 1,5-pentamethylene group and a 1,6-hexamethylene group, and m R¹s may form a combination of hydrocarbon groups having different numbers of carbon atoms. Preferably, R¹ includes at least a divalent saturated hydrocarbon group having 2 carbon atoms and a divalent saturated hydrocarbon group having 3 carbon atoms. More preferably, R¹ includes an ethylene group excellent in affinity with the main structural unit of the polyamide resin and an isopropylene group having a large free volume, so that the effect of reducing the melt viscosity can be more effectively exhibited. Here, it is preferable that the end structure represented by the general formula (I) contains 10 or more ethylene groups and 6 or less isopropylene groups, so that a nearly desired amount of end structures can be introduced into the polyamide resin, leading to further improvement of the melt viscosity reducing effect.

R² represents H or a monovalent organic group. From the viewpoint of affinity with the polyamide resin, R² is preferably a monovalent hydrocarbon group having 1 or more and 30 or less carbon atoms. When R² is a monovalent hydrocarbon group, affinity with the main structural unit of the polyamide resin is improved as the number of carbon atoms in R² decreases, and therefore R² is more preferably a hydrocarbon group having 1 to 20 carbon atoms, still more preferably a hydrocarbon group having 1 to 10 carbon atoms. In addition, from the viewpoint of thermal stability and discoloration prevention of the end modified polyamide resin, R² is more preferably a monovalent saturated hydrocarbon group. Examples of R² include a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group and an eicosyl group. Among them, a methyl group and an ethyl group, which are excellent in affinity with the main structural unit of the polyamide resin, are more preferable.

In the general formula (I), -X- represents -NH-, - N(CH₃)-, - (C=O) - or -CH₂-CH (OH) -CH₂-O-. Among them, -NH-which is excellent in affinity with the main structural unit of the polyamide resin is more preferable.

The end modified polyamide resin of the present invention has an end structure represented by the general formula (I) at least at some of the ends of the polyamide resin.

The end modified polyamide resin of the present invention contains an end structure represented by the general formula (I), in an amount of 1 to 10% by mass based on 100% by mass of the end modified polyamide resin. When the content of the end structure represented by the general formula (I) is less than 1% by mass, the melt viscosity of the end modified polyamide resin increases, and thus molding processability is deteriorated. The content of the end structure represented by the general formula (I) is preferably 2% by mass or more, more preferably 3% by mass or more.

On the other hand, when the content of the end structure represented by the general formula (I) is more than 10% by mass, the average particle diameter of dispersed phases formed by the general formula (I) described later becomes larger than 50 nm, leading to reduction of the mechanical strength of a molded article. The content of the end structure represented by the general formula (I) is preferably 8% by mass or less, more preferably 5% by mass or less.

In the present invention, the content of the end structure represented by the general formula (I) in the end modified polyamide resin can be adjusted to fall within a desired range by, for example, the blending amount of the later-described terminal modification agent represented by the general formula (III), which is used in production of the end modified polyamide resin.

The melt viscosity of end modified polyamide resin of the present invention at a temperature higher than a melting point by 60°C and a shear rate of 9728 sec⁻¹ is preferably 8 Pa·s or less. When the melt viscosity at a temperature higher than a melting point by 60°C and a shear rate of 9728 sec⁻¹ is 8 Pa·s or less, molding processability can be further improved. The melt viscosity is preferably 7 Pa·s or less, more preferably 6 Pa·s or less, still more preferably 5 Pa·s or less. On the other hand, from the viewpoint of a handling characteristic, the melt viscosity is 0.1 Pa·s or more. The melt viscosity is more 0.5 Pa·s or more, still more preferably 1 Pa·s or more.

The melt viscosity can be measured by a capillary flow meter at a shear rate of 9728 sec⁻¹ after retention of the end modified polyamide resin for 5 minutes at a temperature higher by 60°C than the melting point of the end modified polyamide resin for melting the end modified polyamide resin. As an index for evaluation of the melt viscosity in the present invention, a temperature higher by 60°C than the melting point is selected as a temperature condition which ensures that a melting and well-fluidizing effect is easily exhibited and thermal decomposition hardly proceeds in short-time retention, and a shear rate of 9728 sec⁻¹ is selected as a high shear condition that is intended to form a small, complicated, thin and lightweight molded article.

In the present invention, the melt viscosity of the end modified polyamide resin can be adjusted to fall within a desired range by, the blending amounts of the later-described terminal modification agent represented by the general formula (III) or terminal modification agents represented by the general formulae (III) and (IV), which are used in production of the end modified polyamide resin, or the reaction time.

In the end modified polyamide resin of the present invention, the ratio of the weight average molecular weight Mw to the content [% by mass] of the end structure represented by the general formula (I) (ratio of weight average molecular weight Mw/content of end structure represented by general formula (I)) is 6,000 or more. When the ratio of the amount of the end structure represented by the general formula (I) to the weight average molecular weight Mw increases to the extent that the above-mentioned ratio is less than 6000, the end structure represented by the general formula (I) is easily aggregated, and thus easily forms dispersed phases, so that the dispersed phases have an average particle diameter of more than 50 nm, leading to reduction of the mechanical strength of a molded article.

The ratio of the weight average molecular weight Mw to the content of the end structure represented by the general formula (I) is preferably at least 6100 or more, more preferably 6200 or more. On the other hand, from the viewpoint of molding processability, the above-mentioned ratio is 20000 or less. The above-mentioned ratio is more preferably 18000 or less, still more preferably 16000 or less.

Generally, the melt viscosity can be reduced by decreasing the weight average molecular weight Mw. However, when the weight average molecular weight Mw is decreased, mechanical strength, particularly impact resistance is considerably reduced. As a method for reducing the melt viscosity while maintaining a high weight average molecular weight Mw, i.e. high impact resistance, introduction of the end structure represented by the end structure represented by the general formula (I) is effective. The melt viscosity is reduced in proportion to the introduction amount of the end structure. However, it has been experimentally found that there is an inflection point at which the mechanical strength, particularly the flexural modulus and flexural strength, is rapidly reduced as the introduction amount of the end structure represented by the end structure represented by the general formula (I) increases.

In addition, it has been experimentally found that the mechanical strength, particularly the flexural modulus and flexural strength, is considerably changed depending on the weight average molecular weight Mw when there is no difference in introduction amount of the end structure represented by the end structure represented by the general formula (I).

These phenomena have revealed that both the weight average molecular weight and the introduction amount of the end structure represented by the end structure represented by the general formula (I) are considerably related to the flexural modulus and flexural strength. Further, as a result of analyzing the relationship between the weight average molecular weight Mw and the content of the end structure represented by the general formula (I), it has been found that when the ratio of the weight average molecular weight Mw to the content of the end structure represented by the general formula (I) is within a specific range, it is possible to achieve both mechanical strength and molding processability specifically at a high level.

Here, the content of the end structure represented by the end structure represented by the general formula (I) in the end modified polyamide resin can be determined by ¹H-NMR measurement. The measurement and calculation methods are as follows.

First, a deuterated sulfuric acid solution having an end modified polyamide resin concentration of 50 mg/mL is prepared, and ¹H-NMR measurement is performed with a cumulative number of 256. From the spectral integral value of R¹, the spectral integral value of R², and the spectral integral value of the repeating structure unit of the polyamide resin skeleton (repeating structure unit forming a main chain of a polymer), the content (% by mass) of the end structure represented by the general formula (I) can be calculated.

In addition, the weight average molecular weight (Mw) in the present invention is determined by performing GPC measurement at 30°C using hexafluoroisopropanol (containing 0.005 N sodium trifluoroacetate) as a solvent and using Shodex HFIP-806 M (2 pieces) and HFIP-LG as columns. Here, polymethyl methacrylate is used as a molecular weight standard.

Preferably, the end modified polyamide resin of the present invention has an end structure represented by the following general formula (II). By introducing the end structure represented by the general formula (I) to the polyamide resin, the melt viscosity of the end modified polyamide resin can be reduced to improve molding processability as described above. However, for example, when a terminal modification agent represented by the general formula (III) is reacted with the carboxyl end group of a polyamide resin, the amount of amino end groups in the polyamide resin increases when only the end structure represented by the general formula (I) is introduced. In other words, in the polyamide resin having the end structure represented by the general formula (I), one end is modified with the structure represented by the general formula (I), but the other end is not modified, and remains as an amino end group. Thus, the amino terminal group serves as a base point, the cohesive force between polyamide resins increases, and compatibility between the polyamide resin skeleton (amide group) and the end structure represented by the general formula (I) is deteriorated. Thus, normally, the end structure interposed between polyamide molecular chains and represented by the general formula (I) is easily aggregated due to deterioration of compatibility with the polyamide resin skeleton, resulting in reduction of the mechanical strength of a molded article. The same is true when an end structure compound represented by the general formula (III) is reacted with the amino group end of the polyamide resin.

Thus, when the later-described terminal modification agent represented by the general formula (IV) is reacted with the polyamide resin (i.e. a polyamide resin in which only one end is modified with the structure represented by the general formula (I)) to modify the other end, whereby a polyamide resin further having an end structure represented by the following general formula (II) is obtained, deterioration of compatibility between the end structure represented by the general formula (I) and the polyamide resin skeleton can be suppressed to ensure molded articles exhibit further excellent mechanical strength. In addition, the end structure represented by the general formula (I) and the end structure represented by the general formula (II) are introduced to control the amino end group and the carboxyl end group, whereby a change in molecular weight at melt retention can be suppressed.

By introducing the end structure represented by the general formula (I), the melt viscosity of the end modified polyamide resin can be reduced, and also excellent mechanical strength can be exhibited as described above, but at long-term melt retention during molding or the like, thermal decomposition of the end structure represented by the general formula (I) tends to easily proceed. In the polyamide resin having only the end structure represented by the general formula (I), one end is modified with the end structure represented by the general formula (I), but the other end is not modified, and remains as an amino end group or a carboxyl group. Thus, it is presumed that the amino end group and the carboxyl end group act as a catalyst of thermal decomposition of the end structure represented by the general formula (I), so that thermal decomposition of the end structure represented by the general formula (I) easily proceeds. Therefore, further reduction of the amount of the amino end group and the amount of the carboxyl end group is required

Thus, for example, when the later-described terminal modification agent represented by the general formula (IV) is reacted with the polyamide resin (i.e. a polyamide resin in which only one end is modified with the structure represented by the general formula (I)) to modify the other end, and the end structure represented by the following general formula (II) is further introduced, thermal decomposition of the structure represented by the general formula (I) can be suppressed to inhibit deterioration of the mechanical characteristic due to generation of a gas.

-Y-R³ (II)

In the general formula (II), R³ represents a monovalent hydrocarbon group having 1 or more and 30 or less carbon atoms. Affinity with the main structural unit of the polyamide resin is improved as the number of carbon atoms in R³ decreases, and therefore R³ is preferably a hydrocarbon group having 1 to 30 carbon atoms. Specific examples of the hydrocarbon group include linear alkyl groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, an eicosyl group, a henicosyl group, a heneicosyl group, a docosyl group, a tricosyl group, a tetracosyl group, a pentacosyl group, a hexacosyl group, a heptacosyl group, an octacosyl group, a nonacosyl group and a triacontyl group; branched alkyl groups such as an isopropyl group, an isobutyl group, a tert-butyl group, an isopentyl group and a neopentyl group; cycloalkyl groups such as a cyclopentyl group, a cyclohexyl group and a cycloheptyl group; aryl groups such as a phenyl group and a tolyl group; and aralkyl groups such as a benzyl group and a 2-phenylethyl group. From the viewpoint of thermal stability and discoloration prevention of the end modified polyamide resin, R³ is more preferably a monovalent saturated hydrocarbon group having 1 or more and 20 or less carbon atoms, or an aryl group.

When X in the general formula (I) is -NH-, -N(CH₃)- or -CH₂-CH(OH)-CH₂-O-, -Y- in the general formula (II) represents -(C=O)-. When X in the general formula (I) is - (C=O)- or -CH₂-CH(OH)-CH₂-O-, -Y- in the general formula (II) represents -NH- or -N(CH₃)-.

Normally, an amino end group and a carboxy end group form the ends of the polyamide resin, and when the terminal modification agent represented by the general formula (III) has an amino end group, the terminal modification agent reacts with the carboxyl end group of the polyamide resin, so that X in the general formula (I) is -NH- or -N(CH₃)-. In this case, the amino end group which is one end of the polyamide resin is blocked with the terminal modification agent represented by the general formula (IV), and Y in the general formula (II) is -(C=O)-.

On the other hand, when the terminal modification agent represented by the general formula (III) has a carboxyl end group, the terminal modification agent reacts with the amino end group of the polyamide resin, so that X in the general formula (I) is -(C=O)-. In this case, the carboxyl end group which is the other end of the polyamide resin is blocked with the terminal modification agent represented by the general formula (IV), and Y in the general formula (II) is -NH- or -N(CH₃)-. Further, when the terminal modification agent represented by the general formula (III) has a glycidyl group, X in the general formula (I) is -CH₂-CH(OH)-CH₂-O-. In this case, Y in the general formula (II) may be -(C=O)-, -NH- or -N(CH₃)-.

Preferably, the end modified polyamide resin of the present invention contains 0.1 to 5% by mass (0.1% by mass or more and 5% by mass or less) of the end structure represented by the general formula (II), based on 100% by mass of the end modified polyamide resin. When the content of the end structure represented by the general formula (II) is 0.1% by mass or more, thermal decomposition of the structure represented by the general formula (I) in the end modified polyamide resin can be suppressed at melt retention to further improve thermal stability at melt retention, and deterioration of the mechanical characteristic due to generation of a gas can be inhibited. The content of the end structure represented by the general formula (II) is more preferably 0.2% by mass or more, still more preferably 0.4% by mass or more. On the other hand, when the content of the end structure represented by the general formula (II) is 5% by mass or less, it is possible to suppress deterioration of mechanical strength. The content of the end structure represented by the general formula (II) is more preferably 3% by mass or less, still more preferably 1% by mass or less.

Here, the content of the end structure represented by the general formula (II) in the end modified polyamide resin can be determined by ¹H-NMR measurement. The measurement and calculation methods are as follows.

First, a deuterated sulfuric acid solution having an end modified polyamide resin concentration of 50 mg/mL is prepared, and ¹H-NMR measurement is performed with a cumulative number of 256. From the spectral integral value of R³, and the spectral integral value of the repeating structure unit of the polyamide resin skeleton (repeating structural unit forming a main chain of a polymer), the content (% by mass) of the end structure (II) can be calculated.

In the end modified polyamide resin of the present invention, it is preferable that when observed with an electron microscope, a cross-section of a molded article including the end modified polyamide resin of the present invention has a morphology in which the main chain of the end modified polyamide resin and the non-end modified polyamide resin form continuous phases, the end structure represented by the general formula (I) forms dispersed phases, and the average particle diameter of the dispersed phases formed by the end structure represented by the general formula (I) is 10 nm or more and 50 nm or less. When the average particle diameter of the dispersed phases formed by the end structure represented by the general formula (I) is less than 50 nm, concentration of stress on the flexible dispersed phases is prevented, so that reduction of mechanical strength can be suppressed. When the average particle diameter of the dispersed phases formed by the end structure represented by the general formula (I) is more than 10 nm, excellent mechanical strength can be exhibited.

Here, the average particle diameter of the dispersed phases formed by the end structure represented by the general formula (I) can be measured by the following method. In the present invention, the diameter of the dispersed phase is determined by observation of a cross-section of a molded article. Since the structure of the general formula (II) does not form dispersed phases, the dispersed phase structure determined by observation represents dispersed phases formed by the structure of the general formula (I). When the dispersed phase formed by the end structure represented by the general formula (I) is an exact circle, the particle diameter is a diameter of the circle, and is measured using a test piece for flexural evaluation in accordance with ISO 178. First, the molding temperature is set to a temperature higher than a melting point by about 30°C, the mold temperature is set to 80°C, and the end modified polyamide resin is subjected to injection molding under a molding cycle condition in which the total of the injection time and the pressure keeping time is 10 seconds, and the cooling time is 10 seconds. In this way, the test piece for evaluation is prepared. Subsequently, a 100 µm-thick section is cut out from the obtained test piece for evaluation, the polyamide resin part is stained by phosphotungstic acid stain, an ultrathin section is then cut out, and the dispersed state of dispersed phases formed by the end structure represented by the general formula (I) is observed with a transmission electron microscope (TEM) at a magnification of 20,000. The cutout portion of the section from the test piece for evaluation is not particularly limited. On the surface of the section, the diameters of randomly selected 100 or more dispersed phases formed by the end structure represented by the general formula (I) are measured, and an average particle diameter is determined. Here, when the dispersed phase is an exact circle, the diameter of the circle is defined as the particle diameter, and when the dispersed phase is not an exact circle or a circle, the average of the long diameter and the short diameter of the dispersed phase is defined as the particle diameter. Here, the long diameter is the maximum distance between two parallel lines A when the dispersed phase is sandwiched between the two parallel lines A which are in contact with the dispersed phase. The short diameter is the maximum distance between two parallel lines B when the dispersed phase is sandwiched by the two parallel lines B which are in contact with the dispersed phase and perpendicular to the parallel lines A.

Preferably, the end modified polyamide resin of the present invention contains an amino end group in an amount of 10 to 80 mol/t (10 mol/t or more and 80 mol/t or less). When the amount of the amino end group is 80 mol/t or less, thermal decomposition from the amino end group hardly occurs at melt retention during molding processing, so that a decomposed product can be inhibited from acting as a plasticizer, and therefore reduction of the mechanical strength of a molded product can be suppressed. The amount of the amino end group is more preferably 60 mol/t or less, still more preferably 40 mol/t or less. On the other hand, when the amount of the amino end group is 10 mol/t or more, reduction of intermolecular interaction can be suppressed, so that reduction of mechanical strength can be suppressed. The amount of the amino end group is more preferably 15 mol/t or more, still more preferably 20 mol/t or more.

Here, the content of the amino end group in the end modified polyamide resin can be measured by dissolving the end modified polyamide resin in a phenol/ethanol mixed solution (ratio: 83.5/16.5 in terms of a mass ratio), and titrating the resulting solution with a hydrochloric acid aqueous solution using thymol blue as an indicator.

In the present invention, the content of the amino end group in the end modified polyamide resin can be adjusted to fall within a desired range by, the blending amounts of the later-described terminal modification agent represented by the general formula (III) or terminal modification agents represented by the general formulae (III) and (IV), which are used in production of the end modified polyamide resin, or the reaction time.

The weight average molecular weight (Mw) of the end modified polyamide resin of the present invention, which is measured by gel permeation chromatography (GPC), is preferably 18,000 or more. When the weight average molecular weight is 18,000 or more, the mechanical characteristic can be further improved. The weight average molecular weight is preferably 19,000 or more, more preferably 20,000 or more. The weight average molecular weight is preferably 30,000 or less. When the weight average molecular weight (Mw) is 30,000 or less, the melt viscosity can be further reduced to further improve molding processability. The weight average molecular weight is preferably 28,000 or less, more preferably 26,000 or less. The method for measuring the weight average molecular weight (Mw) in the present invention is as described above.

In the present invention, the weight average molecular weight of the end modified polyamide resin can be adjusted to fall within a desired range by, the blending amounts of the later-described terminal modification agent represented by the general formula (III) or terminal modification agents represented by the general formulae (III) and (IV), which are used in production of the end modified polyamide resin, or the reaction time.

The melting point (Tm) of the end modified polyamide resin of the present invention is preferably 150°C or higher, more preferably 200°C or higher. Here, the melting point of the end modified polyamide resin can be determined by differential scanning calorimetry (DSC). The method for measuring the melting point is as follows. 5 to 7 mg of the end modified polyamide resin is weighed. In a nitrogen atmosphere, the temperature is elevated from 20°C to Tm + 30°C at a temperature elevation rate of 20°C/min. Subsequently, the temperature is decreased to 20°C at a cooling rate of 20°C/min. The temperature at the top of an endothermic peak appearing at the time of elevating the temperature again from 20°C to Tm + 30°C at a temperature elevation rate of 20°C/min is defined as a melting point (Tm) .

Examples of the end modified polyamide resin having a melting point of 150°C or higher include the above-mentioned polyamides and copolymers thereof, which have, at the end thereof, the structure represented by the general formula (I).

In the end modified polyamide resin of the present invention, the relative viscosity (ηr) of a 98% sulfuric acid solution having a resin concentration of 0.01 g/ml is preferably 1.3 to 3.0 at 25°C. When the relative viscosity is 1.3 or more, toughness can be improved. The relative viscosity is more preferably 1.4 or more, still more preferably 1.5 or more. On the other hand, when the relative viscosity is 3.0 or less, molding processability can be further improved. The relative viscosity is more preferably 2.1 or less, still more preferably 2.05 or less, especially preferably 2.0 or less.

In the present invention, the relative viscosity of the end modified polyamide resin can be adjusted to fall within a desired range by, the blending amounts of the later-described terminal modification agent represented by the general formula (III) or terminal modification agents represented by the general formulae (III) and (IV), which are used in production of the end modified polyamide resin, or the reaction time.

A method for producing the end modified polyamide resin of the present invention will now be described.

Examples of the method for producing the end modified polyamide resin to be used in an embodiment of the present invention include:
(1) a method in which a polyamide resin, terminal modification agent represented by the following general formula (III), and a terminal modification agent represented by the following general formula (IV) and other components as necessary are melted and kneaded at a temperature equal to or higher than the melting point of the polyamide resin, and reacted, or are mixed in a solution, and reacted, followed by removing the solvent; and
(2) a method in which a raw material that forms a main structural unit of a polyamide resin, a terminal modification agent represented by the following general formula (III), and a terminal modification agent represented by the following general formula (IV) and other components as necessary are added and mixed, and the mixture is reacted (method of addition at reaction).

Specifically, it is preferable that a raw material of the end modified polyamide resin is added in a reaction vessel, purged with nitrogen, and heated to be reacted. When the reaction time here is excessively short, mechanical strength may be reduced because not only the molecular weight is not increased, but also the amount of an oligomer component increases. Thus, the nitrogen flow time in the reaction time is preferably 15 minutes or more. On the other hand, when the reaction time is excessively long, thermal decomposition proceeds, so that coloring or the like occurs, and therefore the nitrogen flow time in the reaction time is preferably 8 hours or less.

Z- (R¹-O)ₘ-R² (III)

In the general formula (I), m represents 2 to 100. m is preferably 5 or more, more preferably 8 or more, still more preferably 16 or more similarly to m in the general formula (I). On the other hand, m is preferably 70 or less, more preferably 50 or less.

R¹ represents a divalent hydrocarbon group having 2 to 10 carbon atoms, R² represents H or an organic group, and is preferably a monovalent hydrocarbon group having 1 to 30 carbon atoms when the organic group is a hydrocarbon group. Examples of R¹ and R² include those shown as R¹ and R², respectively, in the general formula (I).

Z- represents H₂N-, HN(CH₃)-, HO(C=O)- or W-O-, and W represents glycidyl. Z- is more preferably H₂N- which is excellent in reactivity with the end of the polyamide.

H-Y'-R³ (IV)

In the general formula (IV), R³ represents a monovalent hydrocarbon group having 1 to 30 carbon atoms. As with the general formula (II), R³ is preferably a monovalent saturated hydrocarbon group from the viewpoint of thermal stability and discoloration prevention of the end modified polyamide resin. When Z in the general formula (III) is H₂N -, HN(CH₃)- or W-O-, -Y'- in the general formula (IV) represents -O(C=O)-. When Z in the general formula (III) is HO(C=O)- or W-O-, Y' in the general formula (IV) represents -NH- or -N(CH₃)-.

The number average molecular weight of the terminal modification agent represented by formula (III) is preferably 500 to 10000. When the number average molecular weight is 500 or more, the melt viscosity can be further reduced. The number average molecular weight is more preferably 800 or more, still more preferably 900 or more. On the other hand, when the number average molecular weight is 10000 or less, affinity with the main structural unit of the polyamide resin can be further improved. The number average molecular weight is more preferably 5000 or less, still preferably 2500 or less, even more preferably 1500 or less. The number average molecular weight can be measured by, for example, gel permeation chromatography (GPC).

Specific examples of the terminal modification agent represented by the general formula (III), where R² = H, include poly(ethylene glycol)amine, poly(trimethylene glycol)amine, poly(propylene glycol)amine, poly(tetramethylene glycol)amine, poly(ethylene glycol)poly(propylene glycol)amine, poly(ethylene glycol)carboxylic acid, poly(trimethylene glycol)carboxylic acid, poly(propylene glycol)carboxylic acid, poly(tetramethylene glycol)carboxylic acid and poly(ethylene glycol)poly(propylene glycol)carboxylic acid. When the terminal modification agent includes two polyalkylene glycols, the terminal modification agent may have a block polymer structure or a random copolymer structure. In addition, two or more of the above-mentioned terminal modification agents can also be used. Examples of the terminal modification agent, where R² is a hydrocarbon group, include methoxy poly(ethylene glycol)amine, methoxy poly(trimethylene glycol)amine, methoxy poly(propylene glycol)amine, methoxy poly(tetramethylene glycol)amine, methoxy poly(ethylene glycol)poly(propylene glycol)amine, methoxy poly(ethylene glycol)carboxylic acid, methoxy poly(trimethylene glycol)carboxylic acid, methoxy poly(propylene glycol)carboxylic acid, methoxy poly(tetramethylene glycol)carboxylic acid, methoxy poly(ethylene glycol)poly(propylene glycol)carboxylic acid, lauryl alcohol poly(ethylene glycol)glycidyl ether and phenol poly(ethylene glycol)glycidyl ether. When the terminal modification agent includes two polyalkylene glycols, the terminal modification agent may have a block polymer structure or a random copolymer structure. Two or more of the above-mentioned terminal modification agents can also be used.

Specific examples of the terminal modification agent represented by the general formula (IV) include aliphatic monocarboxylic acids such as acetic acid, propionic acid, butyric acid, valeric acid, caproic acid, enanthic acid, caprylic acid, pelargonic acid, undecanoic acid, lauric acid, tridecanoic acid, myristic acid, myristoleic acid, palmitic acid, stearic acid, oleic acid, linoleic acid, arachic acid and cerotic acid; cycloaliphatic monocarboxylic acids such as cyclohexanecarboxylic acid and methylcyclohexanecarboxylic acid; aromatic monocarboxylic acids such as benzoic acid, toluic acid, ethylbenzoic acid and phenylacetic acid; aliphatic monoamines such as methylamine, ethylamine, propylamine, butylamine, pentylamine, hexylamine, heptylamine, octylamine, 2-ethylhexylamine, nonylamine, decylamine, undecylamine, dodecylamine, tridecylamine, tetradecylamine, pentadecylamine, hexadecylamine, octadecylamine, nonadecylamine and icosylamine; cycloaliphatic monoamines such as cyclohexylamine and methylcyclohexylamine; and aromatic monoamines such as benzylamine and β-phenylethylamine. In addition, two or more of the above-mentioned terminal modification agents can also be used.

When an end modified polyamide resin is produced by a method in which a raw material of a polyamide resin is reacted with a terminal modification agent during polymerization, either a melt polymerization method including carrying out a reaction at a temperature equal to or higher than the melting point of the polyamide resin or a solid phase polymerization method including carrying out a reaction at a temperature lower than the melting point of the polyamide resin may be used.

Examples of the raw material for the polyamide resin include the above-described amino acid, lactam and mixture of a diamine and a dicarboxylic acid.

On the other hand, when an end modified polyamide resin is produced by melting and kneading a polyamide resin and a terminal modification agent, it is preferable to carry out a reaction at a temperature higher than the melting point (Tm) of the polyamide resin by 10°C or more and 40°C or less. For example, when the polyamide resin and terminal modification agent are melted and kneaded using an extruder, it is preferable that the cylinder temperature of the extruder is within the above-mentioned range. When the melting and kneading temperature is within this range, the end of the polyamide resin and the terminal modification agent can be efficiently bonded to each other while volatilization of the terminal modification agent and decomposition of the polyamide resin are suppressed. The polyamide resin is, for example, the above-mentioned polyamide resin.

A polymerization accelerator can be added as necessary in production of the end modified polyamide resin by a method in which a raw material of a polyamide resin is reacted with a terminal modification agent during polymerization. As the polymerization accelerator, for example, inorganic phosphorus compounds such as phosphoric acid, phosphorous acid, hypophosphorous acid, pyrophosphoric acid, polyphosphoric acid, and alkali metal salts and alkaline earth metal salts thereof are preferable, and in particular, sodium phosphite and sodium hypophosphite are preferably used. Preferably, the polymerization accelerator is used in an amount of 0.001 to 1 part by mass based on 100 parts by mass of the raw material of the polyamide resin (excluding the terminal modification agent). When the addition amount of the polymerization accelerator is 0.001 to 1 part by mass, it is possible to obtain an end modified polyamide resin that is further excellent in balance between the mechanical characteristic and molding processability.

A polyamide resin composition containing an end modified polyamide resin can be obtained by blending a filler, other type of polymer, an impact resistance improver, various kinds of additives and the like in the end modified polyamide resin of the present invention.

As the filler, any filler that is generally used as a filler for resin can be used, so that the strength, rigidity, heat resistance and dimensional stability of a molded article obtained from the polyamide resin composition can be further improved. Examples of the filler include fibrous inorganic fillers such as glass fibers, carbon fibers, potassium titanate whiskers, zinc oxide whiskers, aluminum borate whiskers, aramid fibers, alumina fibers, silicon carbide fibers, ceramic fibers, asbestos fibers, gypsum fibers and metal fibers; and nonfibrous inorganic fillers such as wollastonite, zeolite, sericite, kaolin, mica, talc, clay, pyrophyllite, bentonite, montmorillonite, asbestos, aluminosilicate, alumina, silicon oxide, magnesium oxide, zirconium oxide, titanium oxide, iron oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide and silica.

Two or more of these fillers can be incorporated. As the fillers, hollow fillers can be used. As the filler, a filler treated with a coupling agent such as an isocyanate-based compound, an organosilane-based compound, an organic titanate-based compound, an organoborane-based compound or an epoxy compound can be used. Organized montmorillonite obtained by cation-exchanging interlayer ions with an organic ammonium salt can be used as montmorillonite. Among the fillers, a fibrous inorganic filler is preferable, and in particular, glass fiber and carbon fiber are preferably used.

Examples of the other type of polymer may include polyolefins such as polyethylene and polypropylene, elastomers such as polyamide-based elastomers and polyester-based elastomers, polyester, polycarbonate, polyphenylene ether, polyphenylene sulfide, liquid crystal polymers, polysulfone, polyether sulfone, ABS resins, SAN resins and polystyrene. Two or more of these polymers can be incorporated.

For improving the impact resistance of a molded article obtained from the polyamide resin composition, an impact resistance improver such as a modified polyolefin such as a (co)polymer of an olefin-based compound and/or a conjugated diene-based compound, a polyamide-based elastomer or a polyester-based elastomer is preferably used as other type of polymer.

Examples of the (co)polymer of an olefin-based compound and/or a conjugated diene-based compound include ethylene-based copolymers, conjugated diene-based polymers and conjugated diene-aromatic vinyl hydrocarbon-based copolymers.

Examples of the ethylene-based copolymer include copolymers of ethylene with an α-olefin having 3 or more carbon atoms, a non-conjugated diene, vinyl acetate, vinyl alcohol, and an α,β-unsaturated carboxylic acid and a derivative thereof. Examples of the α-olefin having 3 or more carbon atoms include propylene and butene-1. Examples of the non-conjugated diene include 5-methylidene-2-norbornene, 5-ethylidene-2-norbornene, dicyclopentadiene and 1,4-hexadiene. Examples of the α,β-unsaturated carboxylic acid include acrylic acid, methacrylic acid, ethacrylic acid, crotonic acid, maleic acid, fumaric acid, itaconic acid, citraconic acid and butenedicarboxylic acid. Examples of the derivative of α,β-unsaturated carboxylic acids include alkyl esters, aryl esters, glycidyl esters, acid anhydrides and imides of the above-mentioned α, β-unsaturated carboxylic acids.

The conjugated diene-based polymer refers to a polymer of at least one conjugated diene. Examples of the conjugated diene include 1,3-butadiene, isoprene (2-methyl-1,3-butadiene), 2,3-dimethyl-1,3-butadiene and 1,3-pentadiene. In addition, the above-mentioned polymers in which some or all of unsaturated bonds of the polymer are reduced by hydrogenation are used.

The conjugated diene-aromatic vinyl hydrocarbon-based copolymer refers to a copolymer of a conjugated diene and an aromatic vinyl hydrocarbon, and may be a block copolymer or a random copolymer. Examples of the conjugated diene include 1,3-butadiene and isoprene. Examples of the aromatic vinyl hydrocarbon include styrene. In addition, a copolymer is used in which some or all of unsaturated bonds other than double bonds other than aromatic rings in the conjugated diene-aromatic vinyl hydrocarbon-based copolymer are reduced by hydrogenation.

Specific examples of the impact resistance improver include ethylene/methacrylic acid copolymers, and ethylene/methacrylic acid copolymers salts in which some or all of carboxylic acid moieties form salts with sodium, lithium, potassium, zinc or calcium; ethylene/propylene-g-maleic anhydride copolymers; and ethylene/butene-1-g-maleic anhydride copolymers.

Examples of the various kinds of additives include antioxidants and heat stabilizers (hindered phenol-based agents, hydroquinone-based agents, phosphite-based agents, substituted products thereof, copper halides, iodine compounds and the like); weathering agents (resorcinol-based agents, salicylate-based agents, benzotriazole-based agents, benzophenone-based agents, hindered amine-based agents and the like); mold release agents and lubricants (aliphatic alcohols, aliphatic amides, aliphatic bisamides, bis-urea, polyethylene wax and the like); pigments (cadmium sulfide, phthalocyanine, carbon black and the like); dyes (nigrosine, aniline black and the like); plasticizers (p-oxybenzoic acid octyl, N-butylbenzenesulfonamide and the like); antistatic agents (alkyl sulfate-type anion-based antistatic agents, quaternary ammonium salt-type cation-based antistatic agents, nonionic antistatic agents such as polyoxyethylene sorbitan monostearate, betaine-based amphoteric antistatic agents and the like); and flame retardants (melamine cyanurate, hydroxides such as magnesium hydroxide and aluminum hydroxide, ammonium polyphosphate, brominated polystyrene, brominated polyphenylene oxide, brominated polycarbonate, brominated epoxy resins, combinations of these bromine-based flame retardants and antimony trioxide, and the like). Two or more of these various additives may be used in combination.

The end modified polyamide resin of the present invention and the polyamide resin composition obtained using the end modified polyamide resin can be molded into a desired shape by any melt molding method such as injection molding, extrusion molding, blow molding, vacuum molding, melt spinning or film molding. Molded articles obtained by molding the end modified polyamide resin and the polyamide resin composition obtained using the end modified polyamide resin can be used as, for example, resin molded articles such as electric and electronic device components, automobile components and machine components, fibers for clothing and industrial materials, films for packaging, and films for magnetic recording.

### EXAMPLES

An end modified polyamide resin of the present invention will now be described in further detail by way of examples. In examples and comparative examples, characteristics were evaluated in accordance with the following methods.

### [Relative viscosity (ηr)]:

The relative viscosity of a 98% sulfuric acid solution of an end modified polyamide resin or polyamide resin obtained in each of examples and comparative examples, which had a resin concentration of 0.01 g/ml, was measured at 25°C using an Ostwald viscometer.

### [Molecular weight]:

2.5 mg of the end modified polyamide resin or polyamide resin obtained in each of examples and comparative examples was dissolved in 4 ml of hexafluoroisopropanol (containing 0.005 N sodium trifluoroacetate), and the resulting solution was filtered by a 0.45 µm filter. Using the resulting solution, the number average molecular weight (Mn) and the weight average molecular weight (Mw) were measured by GPC measurement. The measurement conditions are as follows.
- Pump: e-Alliance GPC system (manufactured by Waters Corporation)
- Detector: differential refractometer Waters 2414 (manufactured by Waters Corporation)
- Column: Shodex HFIP-806M (two pieces) + HFIP-LG
- Solvent: hexafluoroisopropanol (containing 0.005 N sodium trifluoroacetate)
- Flow rate: 1 ml/min
- Sample injection amount: 0.1 ml
- Temperature: 30°C
- Molecular weight standard: polymethyl methacrylate.

### [Amount of amino end group [NH₂]] :

0.5 g of the end-modified polyamide resin or polyamide resin obtained in each of examples and comparative examples was precisely weighed, 25 ml of a phenol/ethanol mixed solution (ratio: 83.5/16.5 in terms of a mass ratio) was added to dissolve the end modified polyamide resin or polyamide resin at normal temperature, and the amount (mol/t) of an amino end group was then determined by titrating the resulting solution with 0.02 N hydrochloric acid using thymol blue as an indicator.

### [Identification of end structure and quantitative determination of content of end structure of general formula (I) and content of end structure of general formula (II)]:

For the end modified polyamide resin or polyamide resin obtained in each of examples and comparative examples, ¹H-NMR measurement was performed using FT-NMR JNM-AL400 manufactured by JAPAN ELECTRON OPTICS LABORATORY CO., LTD. First, a solution having a sample concentration of 50 mg/mL was prepared using deuterated sulfuric acid as a measurement solvent. ¹H-NMR measurement of the polyamide resin was performed with a cumulative number of 256. Peaks derived from R¹ and R² moieties in the end structure represented by the general formula (I), a peak derived from a R³ moiety in the end structure represented by the general formula (II), and a peak derived from a repeating structure unit of a polyamide resin skeleton were each identified. The integrated intensity at each peak was calculated, and from the calculated integrated intensity and the number of hydrogen atoms in each structural unit, the content [I] (% by mass) of the end structure represented by the general formula (I) and the content [II] (% by mass) of the end terminal represented by general formula (II) in the end modified polyamide resin were each calculated.

### [Thermal characteristic]:

A differential scanning calorimeter (DSC Q20) manufactured by TA Instruments was used. 5 to 7 mg of the end modified polyamide resin or polyamide resin obtained in each of examples and comparative examples was precisely weighed, and the temperature was elevated from 20 °C to 250°C at a temperature elevation rate of 20°C/min under a nitrogen atmosphere. Subsequently, the temperature was decreased to 20°C at a cooling rate of 20°C/min. The top of an endothermic peak appearing at the time of elevating the temperature again from 20°C to Tm + 30°C at a temperature elevation rate of 20°C/min was defined as a melting point (Tm).

### [Melt viscosity]:

The end modified polyamide resin or polyamide resin obtained in each of examples and comparative examples was dried in a vacuum oven at 80°C for 12 hours or more. A capillary flow meter (Capirograph Model: 1C manufactured by Toyo Seiki Seisaku-sho, Ltd.) was used as a melt viscosity measuring apparatus. The melt viscosity was measured at a temperature higher than the melting point by 60°C and a shear rate of 9728 sec⁻¹ with an orifice having a diameter of 0.5 mm and a length of 5 mm. However, for melting the end modified polyamide resin or polyamide resin, measurement was performed after retention for 5 minutes. The smaller the value of the melt viscosity, the higher the fluidity.

### [Molding processability]:

The end modified polyamide resin or polyamide resin obtained in each of examples and comparative examples was dried in a vacuum oven at 80°C for 12 hours or more. An injection molding machine IS55 EPN manufactured by TOSHIBA MACHINE CO., LTD was used. The cylinder temperature was set to three patterns: temperatures higher by 0°C, 5°C and 10°C than the melting point (Tm) of the end modified polyamide resin or polyamide resin, the mold temperature was set to 80°C, and an ASTM Type 4 dumbbell having a test piece thickness of 1/25 inches (about 1.0 mm) was injection-molded under a molding cycle condition in which the total of the injection time and the pressure keeping time was 10 seconds, and the cooling time was 10 seconds. Injection molding was performed five times. A sample was rated ○ when it was able to collect a molded piece in all of the five molding injections, and a sample was rated x when it was not able to sufficiently fill the mold or collect a molded article in all of the five molding injections.

### [Flexural strength/flexural modulus]:

The end modified polyamide resin or polyamide resin obtained in each of examples and comparative examples was dried in a vacuum dryer at a temperature of 80°C for 12 hours or more, and test pieces were then molded at a cylinder temperature higher than the melting point by 30°C, a mold temperature of 80°C, an injection speed of 100 mm/sec and an injection pressure higher than the minimum pressure (minimum filling pressure) by 1 MPa using an injection molding machine (SG75H-MIV manufactured by Sumitomo Heavy Industries, Ltd.). The flexural strength and the flexural modulus were evaluated at 23°C in accordance with ISO 178. The results are shown in Table 1.

### [Impact resistance]:

The charpy impact (with notch) was evaluated at a temperature of 23°C in accordance with ISO 179.

### [Average diameter of dispersed phases formed by end structure represented by general formula (I)]:

A cut surface at a depth of 500 µm from a surface layer of the injection molding piece for evaluation, which had been obtained as described in the section of "flexural strength/flexural modulus", was observed with a transmission electron microscope (TEM) to examine a dispersed state of dispersed phases formed by the end structure represented by the general formula (I). A 100 µm-thick section was cut out from the injection molding piece, a polyamide skeleton component was stained by phosphotungstic acid stain, and an ultrathin section was then cut out. The sample thus obtained was observed with a transmission electron microscope at a magnification of 20,000 times. 100 or more dispersed phases formed by the end structure represented by the general formula (I) were observed, and the average particle diameter was determined. When the dispersed phase was an exact circle, the diameter of the circle was defined as the particle diameter, and when the dispersed phase was not an exact circle or a circle, the average of the long diameter and the short diameter of the dispersed phase was defined as the particle diameter. Here, the long diameter was the maximum distance between two parallel lines A when the dispersed phase was sandwiched between the two parallel lines A which are in contact with the dispersed phase. The short diameter was the maximum distance between two parallel lines B when the dispersed phase was sandwiched by the two parallel lines B which are in contact with the dispersed phase and perpendicular to the parallel lines A. A sample with dispersed phases having an average particle diameter of 10 to 50 nm was rated "○", and a sample with dispersed phases having an average particle diameter of less than 10 nm or more than 50 nm was rated "×".

### [Raw materials]:

In examples and comparative examples, the following raw materials were used.

- ε-caprolactam: Wako special grade chemical manufactured by Wako Pure Chemical Industries, Ltd.
- Hexamethylenediamine: Wako first class chemical manufactured by Wako Pure Chemical Industries, Ltd.
- Adipic acid: Wako special grade chemical manufactured by Wako Pure Chemical Industries, Ltd.
- Sebacic acid: Wako first class chemical manufactured by Wako Pure Chemical Industries, Ltd.

### [Terminal modification agent represented by general formula (III)]

- Methoxy poly(ethylene glycol)poly(propylene glycol)amine represented by the following structural formula (1): "JEFFAMINE" (registered trademark) M1000 (number average molecular weight Mn: 1000) manufactured by HUNTSMAN Corporation

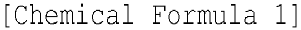

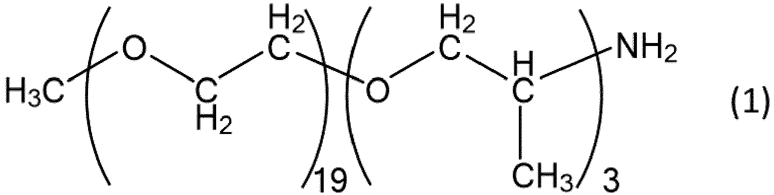

- Methoxy poly(ethylene glycol)poly(propylene glycol)amine represented by the following structural formula (2): "JEFFAMINE" (registered trademark) M2070 (number average molecular weight Mn: 2000) manufactured by HUNTSMAN Corporation

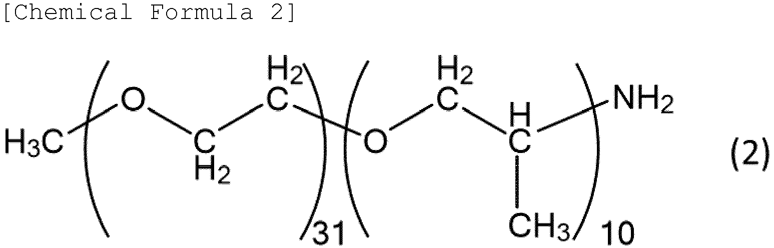

- Methoxy ethylene glycol poly(propylene glycol)amine represented by the following structural formula (3): "JEFFAMINE" (registered trademark) M600 (number average molecular weight Mn: 600) manufactured by HUNTSMAN Corporation

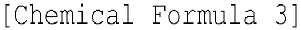

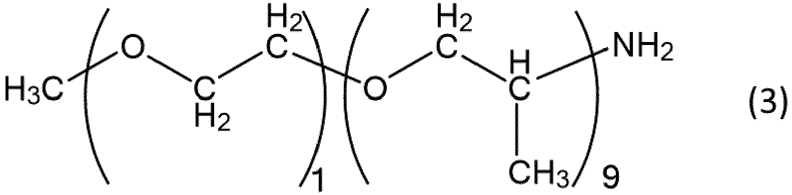

- Lauryl alcohol poly(ethylene glycol)glycidyl ether represented by the following structural formula (4): "Denacol" (registered trademark) EX171 (number average molecular weight Mn: 971) manufactured by Nagase ChemteX Corporation

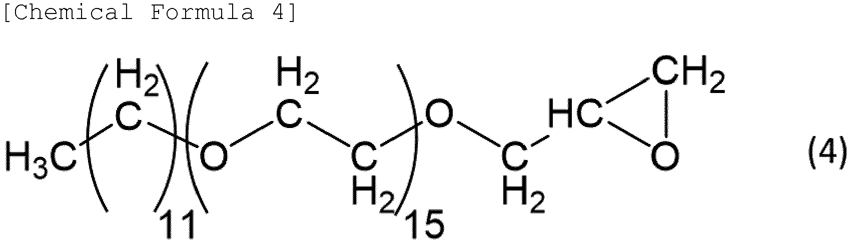

### [Terminal modification agent represented by general formula (IV)]:

- Acetic acid: special grade chemical manufactured by Wako Pure Chemical Industries, Ltd.
- Benzoic acid: special grade chemical manufactured by Wako Pure Chemical Industries, Ltd.

### (Example 1)

700 g of ε-caprolactam, 175 g of ion-exchanged water, 53.9 g of "JEFFAMINE" M1000 and 1.4 g of acetic acid were added in a reaction vessel, sealed, and purged with nitrogen. The set temperature of a heater on the outer periphery of the reaction vessel was set to 260°C, and heating was started. After the internal pressure reached 1.0 MPa, the internal pressure was kept at 1.0 MPa while moisture was released to the outside of the system, and the temperature was elevated until the internal temperature reached 250°C. After the internal temperature reached 240°C, the set temperature of the heater was changed to 245°C, and the internal pressure was adjusted to turn to normal pressure over 1 hour (internal temperature at the time of reaching normal pressure: 245°C). Subsequently, the reaction vessel was held while nitrogen was fed into the vessel (nitrogen flow) for 195 minutes, thereby obtaining an end modified polyamide 6 resin (maximum ultimate temperature: 250°C). Subsequently, the resulting end modified polyamide 6 resin was subjected to Soxhlet extraction with ion-exchanged water to remove an unreacted terminal modification agent. The end modified polyamide 6 resin thus obtained had a weight average molecular weight of 43000, a melting point (Tm) of 220°C and a melt viscosity of 7.8 Pa·s. In addition, the resulting end modified polyamide 6 resin included an end modified polyamide 6 resin having, at the ends thereof, a structure represented by the following chemical formula (5) and a structure represented by the following chemical formula (6). Other physical properties are shown in Table 1.

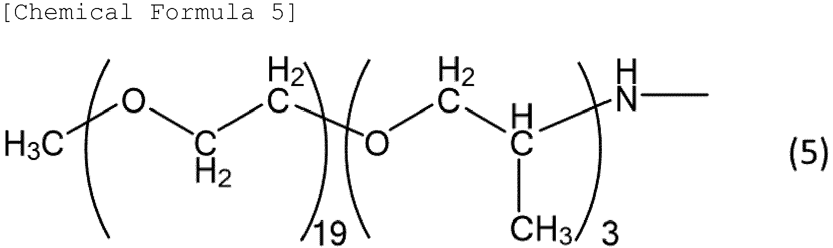

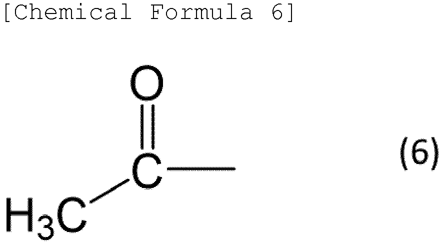

### (Examples 2 to 20 and Comparative Examples 1 to 11)

Except that the raw material was changed to the composition shown in Tables 1 to 3, and the time (nitrogen flow time) during which the reaction vessel was held while nitrogen was fed into the vessel after the internal pressure was set to normal pressure was changed to the time shown in Tables 1 to 3, the same procedure as in Example 1 was carried out to obtain a polyamide 6 resin. Here, the polyamide resin obtained in each of Examples 2 to 13, 15 and 16 and Comparative Examples 1 to 9 and 11 included an end modified polyamide 6 resin having, at the ends thereof, a structure represented by the following chemical formula (5) and a structure represented by the following chemical formula (6).

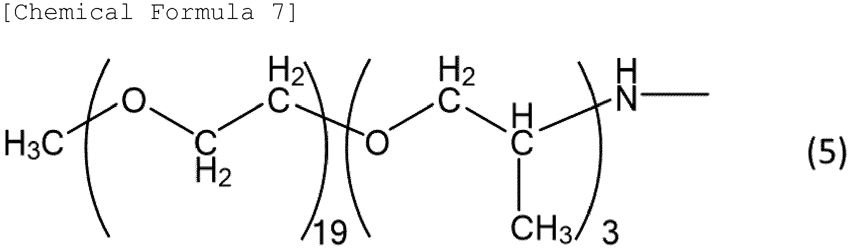

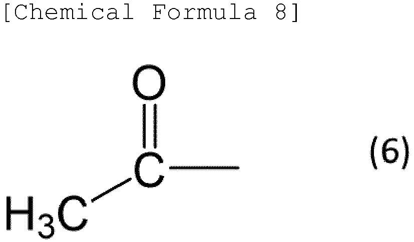

In addition, the polyamide resin obtained in each of Example 14 and Comparative Example 10 included an end modified polyamide 6 resin having, at the end thereof, a structure represented by the following chemical formula (5).

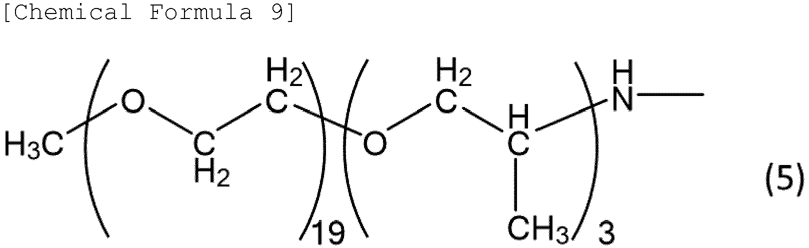

In addition, the polyamide resin obtained in Example 17 included an end modified polyamide 6 resin having, at the ends thereof, a structure represented by the following chemical formula (7) and a structure represented by the following chemical formula (6).

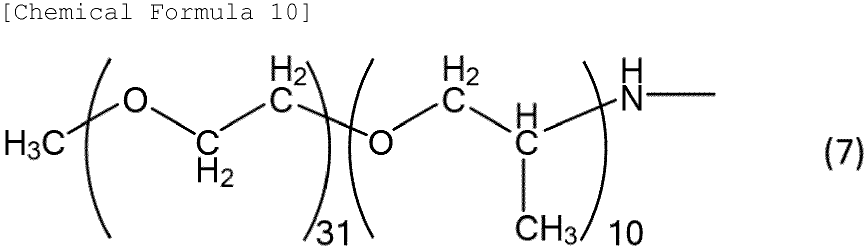

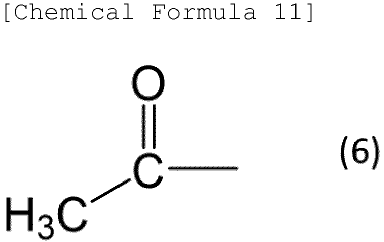

In addition, the polyamide resin obtained in Example 18 included an end modified polyamide 6 resin having, at the ends thereof, a structure represented by the following chemical formula (8) and a structure represented by the following chemical formula (6).

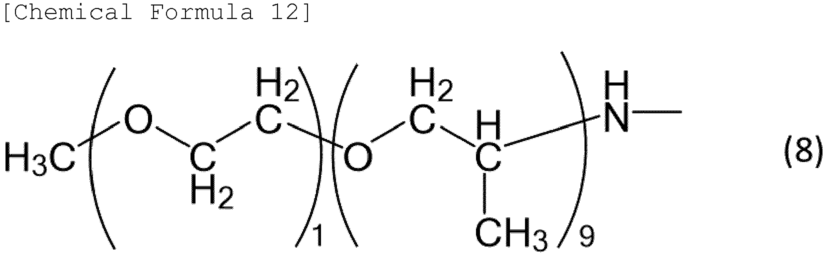

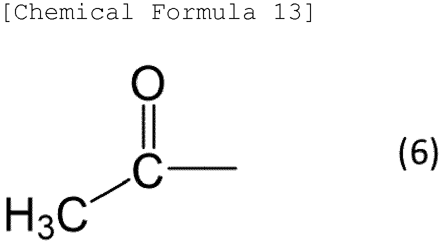

In addition, the polyamide resin obtained in Example 19 included an end modified polyamide 6 resin having, at the ends thereof, a structure represented by the following chemical formula (9) and a structure represented by the following chemical formula (6).

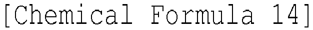

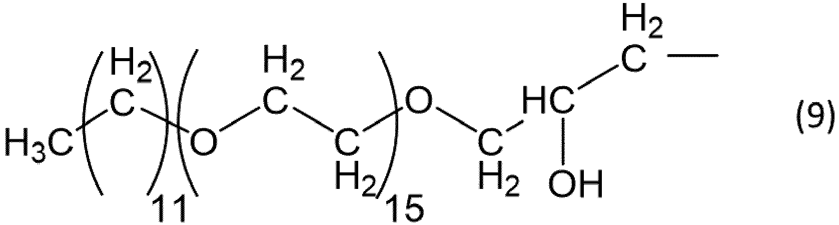

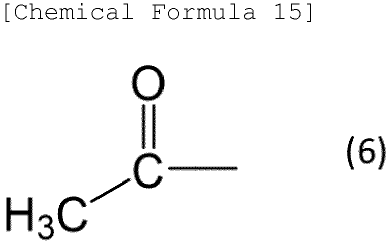

In addition, the polyamide resin obtained in Example 20 included an end modified polyamide 6 resin having, at the ends thereof, a structure represented by the following chemical formula (5) and a structure represented by the following chemical formula (10).

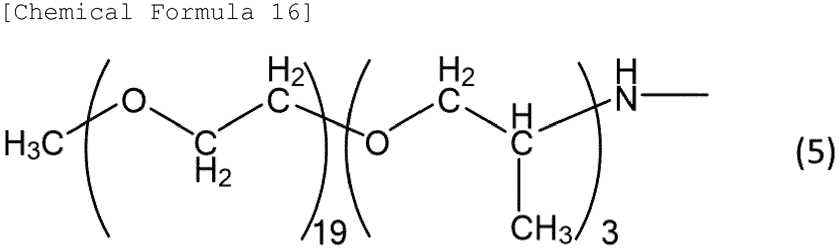

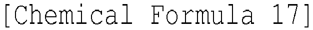

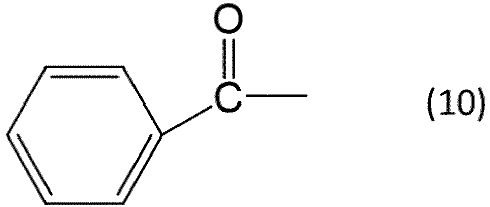

### (Example 21)

331.2 g of hexamethylenediamine, 417.3 g of adipic acid, 175 g of ion-exchanged water, 30.1 g of "JEFFAMINE" M1000 and 5.6 g of acetic acid were added in a reaction vessel, sealed, and purged with nitrogen. The set temperature of a heater on the outer periphery of the reaction vessel was set to 290°C, and heating was started. After the internal pressure reached 1.75 MPa, the internal pressure was kept at 1.75 MPa while moisture was released to the outside of the system, and the temperature was elevated until the internal temperature reached 260°C. After the internal temperature reached 260°C, the set temperature of the heater was changed to 265°C, and the internal pressure was adjusted to turn to normal pressure over 1 hour (internal temperature at the time of reaching normal pressure: 270°C). Subsequently, the reaction vessel was held while nitrogen was fed into the vessel (nitrogen flow) for 180 minutes, thereby obtaining an end modified polyamide 66 resin (maximum ultimate temperature: 270°C). Here, the resulting polyamide resin included an end modified polyamide 66 resin having, at the ends thereof, a structure represented by the following chemical formula (5) and a structure represented by the following chemical formula (6).

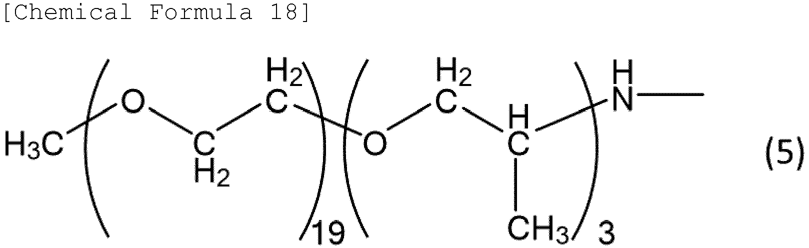

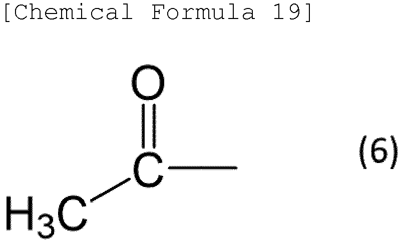

### (Example 22)

270.7 g of hexamethylenediamine, 471.2 g of sebacic acid, 175 g of ion-exchanged water, 30.1 g of "JEFFAMINE" M1000 and 5.6 g of acetic acid were added in a reaction vessel, sealed, and purged with nitrogen. The set temperature of a heater on the outer periphery of the reaction vessel was set to 260°C, and heating was started. After the internal pressure reached 1.0 MPa, the internal pressure was kept at 1.0 MPa while moisture was released to the outside of the system, and the temperature was elevated until the internal temperature reached 240°C. After the internal temperature reached 240°C, the set temperature of the heater was changed to 245°C, and the internal pressure was adjusted to turn to normal pressure over 1 hour (internal temperature at the time of reaching normal pressure: 243°C). Subsequently, the reaction vessel was held while nitrogen was fed into the vessel (nitrogen flow) for 195 minutes, thereby obtaining an end modified polyamide 610 resin (maximum ultimate temperature: 250°C). Here, the resulting polyamide resin included an end modified polyamide resin 610 having, at the ends thereof, a structure represented by the following chemical formula (5) and a structure represented by the following chemical formula (6).

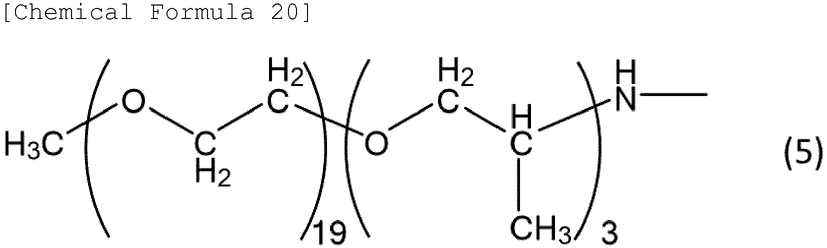

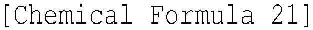

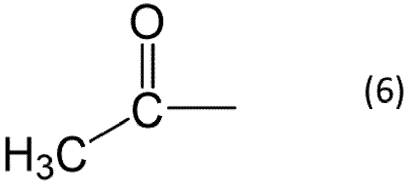

Thereafter, each characteristic was evaluated in the same manner as in Example 1. The results are shown in Tables 1 to 4.

**[Table 1-1]**

| | | | Example 1 | Example 2 | Example 3 | Example 4 | Example 5 |
|---|---|---|---|---|---|---|---|
| Raw materials | ε-Caprolactam | g | 700 | 700 | 700 | 700 | 700 |
| | "JEFFAMINE" M1000 | g | 53.9 | 37.1 | 31.5 | 30.1 | 30.1 |
| | "JEFFAMINE" M2070 | g | - | - | - | - | - |
| | "JEFFAMINE" M600 | g | - | - | - | - | - |
| | "Denacol" EX 171 | g | - | - | - | - | - |
| | Acetic acid | g | 1.4 | 3.2 | 4.2 | 5.6 | 4.2 |
| | Ion-exchanged water | g | 175 | 175 | 175 | 175 | 175 |
| Nitrogen flow time | | min | 210 | 210 | 210 | 210 | 210 |
| Polymer characteristics | Content of end structure (I) | % by mass | 7.0 | 4.9 | 4.2 | 3.9 | 3.9 |
| | Content of end structure (II) | % by mass | 0.1 | 0.3 | 0.3 | 0.4 | 0.3 |
| | Weight average molecular weight (Mw) | ten thousand | 4.3 | 2.9 | 2.6 | 2.4 | 2.6 |
| | Number average molecular weight (Mn) | ten thousand | 2.1 | 1.4 | 1.2 | 1.1 | 1.2 |
| | Mw/ (I) | × 10² | 62.4 | 60.8 | 62.4 | 62.6 | 66.7 |
| | Amino end group [NH₂] | mol/t | 41 | 35 | 25 | 19 | 25 |
| | Melting point (Tm) | °C | 220 | 220 | 220 | 220 | 220 |
| | Relative viscosity (ηr) | - | 1.98 | 1. 98 | 1. 94 | 1.83 | 1. 93 |
| | Melt viscosity | Pa•s | 7.8 | 6.9 | 6.9 | 5.8 | 7.6 |
| Molding processability | Melting point (Tm) + 0°C. | - | × | ○ | ○ | ○ | × |
| | Melting point (Tm) + 5°C | - | ○ | ○ | ○ | ○ | ○ |
| | Melting point (Tm) + 10°C | - | ○ | ○ | ○ | ○ | ○ |
| Molded article | Continuous phase with particle diameter of 10 nm or more and 50 nm or less | - | ○ | ○ | ○ | ○ | ○ |
| Mechanical strength | Flexural strength | MPa | 105 | 107 | 110 | 111 | 110 |
| | Flexural modulus | GPa | 2.4 | 2.5 | 2.6 | 2.6 | 2.6 |
| | Charpy impact value | KJ/m² | 5.2 | 5.1 | 5.0 | 4.9 | 4.9 |

**[Table 1-2]**

| | | | Example 6 | Example 7 | Example 8 | Example 9 |
|---|---|---|---|---|---|---|
| Raw materials | ε-Caprolactam | g | 700 | 700 | 700 | 700 |
| | "JEFFAMINE" M1000 | g | 21.7 | 21.7 | 21.7 | 14.7 |
| | "JEFFAMINE" M2070 | g | - | - | - | - |
| | "JEFFAMINE" M600 | g | - | - | - | - |
| | "Denacol" EX 171 | g | - | - | - | - |
| | Acetic acid | g | 7.0 | 5.6 | 4.2 | 7.0 |
| | Ion-exchanged water | g | 175 | 175 | 175 | 175 |
| Nitrogen flow time | | min | 210 | 210 | 210 | 210 |
| Polymer characteristics | Content of end structure (I) | % by mass | 3.0 | 3.0 | 3.0 | 2.0 |
| | Content of end structure (II) | % by mass | 0.6 | 0.4 | 0.3 | 0.6 |
| | Weight average molecular weight (Mw) | ten thousand | 2.1 | 2.3 | 2.5 | 2.1 |
| | Number average molecular weight (Mn) | ten thousand | 1.0 | 1.1 | 1.2 | 1.0 |
| | Mw/ (I) | × 10² | 70.0 | 76.7 | 83.3 | 105.0 |
| | Amino end group [NH₂] | mol/t | 15 | 19 | 27 | 15 |
| | Melting point (Tm) | °C | 220 | 220 | 220 | 220 |
| | Relative viscosity (ηr) | - | 1.76 | 1.84 | 1.99 | 1.83 |
| | Melt viscosity | Pa• s | 4.1 | 5.9 | 7.9 | 5.8 |
| Molding processability | Melting point (Tm) + 0°C. | - | ○ | ○ | × | ○ |
| | Melting point (Tm) + 5°C | - | ○ | ○ | ○ | ○ |
| | Melting point (Tm) + 10°C | - | ○ | ○ | ○ | ○ |
| Molded article | Continuous phase with particle diameter of 10 nm or more and 50 nm or less | - | ○ | ○ | ○ | ○ |
| Mechanical strength | Flexural strength | MPa | 116 | 116 | 115 | 117 |
| | Flexural modulus | GPa | 2.7 | 2.7 | 2.7 | 2.7 |
| | Charpy impact value | KJ/m² | 4.6 | 4.8 | 4.9 | 4.6 |

**[Table 2-1]**

| | | | Example 10 | Example 11 | Example 12 | Example 13 | Example 14 |
|---|---|---|---|---|---|---|---|
| Raw materials | ε-Caprolactam | g | 700 | 700 | 700 | 700 | 700 |
| | "JEFFAMINE" M1000 | g | 14.7 | 9.1 | 14.7 | 30.1 | 37.1 |
| | "JEFFAMINE" M2070 | g | - | - | - | - | - |
| | "JEFFAMINE" M600 | g | - | - | - | - | - |
| | "Denacol" EX 171 | g | - | - | - | - | - |
| | Acetic acid | g | 5.6 | 7.7 | 9.1 | 1.4 | 0.0 |
| | Ion-exchanged water | g | 175 | 175 | 175 | 175 | 175 |
| Nitrogen flow time | | min | 210 | 210 | 210 | 15 | 150 |
| Polymer characteristics | Content of end structure (I) | % by mass | 2.0 | 1.2 | 2.0 | 3. | 4.9 |
| | Content of end structure (II) | % by mass | 0.4 | 0.6 | 0.7 | 0.1 | 0.0 |
| | Weight average molecular weight (Mw) | ten thousand | 2.4 | 2.0 | 1.7 | 2.6 | 2.9 |
| | Number average molecular weight (Mn) | ten thousand | 1.1 | 0.9 | 0.9 | 1.1 | 1.4 |
| | Mw/ (I) | × 10² | 120.0 | 166.7 | 85.0 | 66.7 | 60.8 |
| | Amino end group [NH₂] | mol/t | 19 | 14 | 11 | 86 | 103 |
| | Melting point (Tm) | °C | 220 | 220 | 220 | 220 | 220 |
| | Relative viscosity (ηr) | - | 2.00 | 1.98 | 1.53 | 1.95 | 1.99 |
| | Melt viscosity | Pa• s | 7.9 | 7.8 | 2.5 | 7.6 | 7.1 |
| Molding processability | Melting point (Tm) + 0°C. | - | × | × | ○ | × | ○ |
| | Melting point (Tm) + 5°C | - | ○ | ○ | ○ | ○ | ○ |
| | Melting point (Tm) + 10°C | - | ○ | ○ | ○ | ○ | ○ |
| Molded article | Continuous phase with particle diameter of 10 nm or more and 50 nm or less | - | ○ | ○ | ○ | ○ | ○ |
| Mechanical strength | Flexural strength | MPa | 115 | 120 | 115 | 107 | 102 |
| | Flexural modulus | GPa | 2.7 | 2.8 | 2.7 | 2.5 | 2.4 |
| | Charpy impact value | KJ/m² | 4.8 | 4.5 | 3.9 | 4.7 | 5.0 |

**[Table 2-2]**

| | | | Example 15 | Example 16 | Example 17 | Example 18 | Example 19 |
|---|---|---|---|---|---|---|---|
| Raw materials | ε-Caprolactam | g | 700 | 700 | 700 | 700 | 700 |
| | "JEFFAMINE" M1000 | g | 37.1 | 30.1 | - | - | - |
| | "JEFFAMINE" M2070 | g | - | - | 21.7 | - | - |
| | "JEFFAMINE" M600 | g | - | - | - | 21.7 | - |
| | "Denacol" EX 171 | g | - | - | - | - | 30.1 |
| | Acetic acid | g | 3.2 | 7.0 | 5.6 | 5.6 | 5.6 |
| | Ion-exchanged water | g | 175 | 175 | 175 | 175 | 175 |
| Nitrogen flow time | | min | 270 | 270 | 195 | 195 | 210 |
| Polymer characteristics | Content of end structure (I) | % by mass | 4.9 | 3.9 | 3.0 | 3.0 | 3.9 |
| | Content of end structure (II) | % by mass | 0.3 | 0.6 | 0.4 | 0.4 | 0.4 |
| | Weight average molecular weight (Mw) | ten thousand | 3.2 | 2.6 | 2.3 | 2.3 | 2.4 |
| | Number average molecular weight (Mn) | ten thousand | 1.5 | 1.5 | 1.1 | 1.1 | 1.1 |
| | Mw/ (I) | × 10² | 66.0 | 66.7 | 76.7 | 76.7 | 62.6 |
| | Amino end group [NH₂] | mol/t | 18 | 7 | 19 | 19 | 19 |
| | Melting point (Tm) | °C | 220 | 220 | 220 | 220 | 220 |
| | Relative viscosity (ηr) | - | 1.98 | 1.98 | 1.88 | 1.82 | 1.85 |
| | Melt viscosity | Pa• s | 7.9 | 7.7 | 6.6 | 5.7 | 7.7 |
| Molding processability | Melting point (Tm) + 0°C. | - | × | × | ○ | ○ | × |
| | Melting point (Tm) + 5°C | - | ○ | ○ | ○ | ○ | ○ |
| | Melting point (Tm) + 10°C | - | ○ | ○ | ○ | ○ | ○ |
| Molded article | Continuous phase with particle diameter of 10 nm or more and 50 nm or less | - | ○ | ○ | ○ | ○ | ○ |
| Mechanical strength | Flexural strength | MPa | 107 | 108 | 114 | 115 | 109 |
| | Flexural modulus | GPa | 2.5 | 2.6 | 2.7 | 2.7 | 2.6 |
| | Charpy impact value | KJ/m² | 5.1 | 4.8 | 4.9 | 4.9 | 4.7 |

**[Table 3-1]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Raw materials | ε-Caprolactam | g | 700 | 700 | 700 | 700 | 700 | 700 |
| | "JEFFAMINE" M1000 | g | 30.1 | 30.1 | 30.1 | 31.5 | 21.7 | 14.7 |
| | "JEFFAMINE" M2070 | g | - | - | - | - | - | - |
| | "JEFFAMINE" M600 | g | - | - | - | - | - | - |
| | "Denacol" EX 171 | g | - | - | - | - | - | - |
| | Acetic acid | g | 3.2 | 3.5 | 7.0 | 5.6 | 7.0 | 3.2 |
| | Ion-exchanged water | g | 175 | 175 | 175 | 175 | 175 | 175 |
| Nitrogen flow time | | min | 195 | 195 | 195 | 195 | 195 | 195 |
| Polymer characteristics | Content of end structure (I) | % by mass | 3.9 | 3.9 | 3.9 | 4.2 | 3.0 | 2.0 |
| | Content of end structure (II) | % by mass | 0.3 | 0.3 | 0.6 | 0.4 | 0.6 | 0.3 |
| | Weight average molecular weight (Mw) | ten thousand | 2.9 | 2.8 | 2.1 | 2.4 | 1.5 | 2.9 |
| | Number average molecular weight (Mn) | ten thousand | 1.3 | 1.3 | 1.0 | 1.1 | 1.0 | 1.3 |
| | Mw/ (I) | × 10² | 74.4 | 71.8 | 53.8 | 55.3 | 50.0 | 145.0 |
| | Amino end group [NH₂] | mol/t | 35 | 31 | 15 | 19 | 15 | 34 |
| | Melting point (Tm) | °C | 220 | 220 | 220 | 220 | 220 | 220 |
| | Relative viscosity (ηr) | - | 2.03 | 2.8 | 1.64 | 1.91 | 1.35 | 2.05 |
| | Melt viscosity | Pa• s | 11.2 | 10.2 | 3.3 | 6.9 | 1.6 | 13.6 |
| Molding processability | Melting point (Tm) + 0°C. | - | × | × | ○ | ○ | ○ | × |
| | Melting point (Tm) + 5°C | - | × | × | ○ | ○ | ○ | × |
| | Melting point (Tm) + 10°C | - | ○ | ○ | ○ | ○ | ○ | ○ |
| Molded article | Continuous phase with particle diameter of 10 nm or more and 50 nm or less | - | ○ | ○ | > 50 | > 50 | > 50 | ○ |
| Mechanical strength | Flexural strength | MPa | 110 | 110 | 103 | 102 | 90 | 115 |
| | Flexural modulus | GPa | 2.6 | 2.6 | 2.4 | 2.4 | 2.5 | 2.7 |
| | Charpy impact value | KJ/m² | 5.0 | 5.0 | 4.5 | 4.8 | 3.5 | 5.0 |

**[Table 3-2]**

| | | | Comparative Example 7 | Comparative Example 8 | Comparative Example 9 | Comparative Example 10 | Comparative Example 11 |
|---|---|---|---|---|---|---|---|
| Raw materials | ε-Caprolactam | g | 700 | 700 | 700 | 700 | 700 |
| | "JEFFAMINE" M1000 | g | 2.8 | 84 | 53.9 | 30.1 | 30.1 |
| | "JEFFAMINE" M2070 | g | - | - | - | - | - |
| | "JEFFAMINE" M600 | g | - | - | - | - | - |
| | "Denacol" EX 171 | g | - | - | - | - | - |
| | Acetic acid | g | 5.6 | 3.2 | 3.2 | 0.0 | 75.0 |
| | Ion-exchanged water | g | 175 | 175 | 175 | 175 | 175 |
| Nitrogen flow time | | min | 195 | 195 | 195 | 270 | 300 |
| Polymer characteristics | Content of end structure (I) | % by mass | 0.4 | 11.6 | 7.0 | 3.9 | 3.9 |
| | Content of end structure (II) | % by mass | 0.4 | 0.3 | 0.3 | 0.0 | 6.0 |
| | Weight average molecular weight (Mw) | ten thousand | 2.4 | 2.8 | 2.9 | 5.8 | 1.2 |
| | Number average molecular weight (Mn) | ten thousand | 1.1 | 1.4 | 0.9 | 2.6 | 0.6 |
| | Mw/(I) | × 10² | 600.0 | 24.1 | 41.4 | 148.7 | 30.8 |
| | Amino end group [NH₂] | mol/t | 20 | 36 | 41 | 72 | 10 |
| | Melting point (Tm) | °C | 221 | 219 | 220 | 220 | 218 |
| | Relative viscosity (ηr) | - | 2.09 | 1.68 | 1.81 | 2.23 | 1.24 |
| | Melt viscosity | Pa•s | 18.1 | 3.6 | 5.3 | 32.8 | 0.8 |
| Molding processability | Melting point (Tm) + 0°C. | - | × | ○ | ○ | × | ○ |
| | Melting point (Tm) + 5°C | - | × | ○ | ○ | × | ○ |
| | Melting point (Tm) + 10°C | - | × | ○ | ○ | × | ○ |
| Molded article | Continuous phase with particle diameter of 10 nm or more and 50 nm or less | - | < 10 | > 50 | > 50 | ○ | > 50 |
| Mechanical strength | Flexural strength | MPa | 120 | 71 | 94 | 109 | 48 |
| | Flexural modulus | GPa | 2.8 | 1.8 | 2.2 | 2.5 | 2.4 |
| | Charpy impact value | KJ/m² | 4.8 | 4.9 | 5.0 | 5.4 | 1.3 |

**[Table 4]**

| | | | Example 20 | Example 21 | Example 22 |
|---|---|---|---|---|---|
| Raw materials | Hexamethylenediamine | g | 700 | 331.2 | 270.7 |
| | Adipic acid | g | - | 417.3 | - |
| | Sebacic acid | g | - | - | 471.2 |
| | "JEFFAMINE" M1000 | g | 30.1 | 30.1 | 30.1 |
| | Benzoic acid | g | 13.7 | - | - |
| | Acetic acid | g | - | 5.6 | 5.6 |
| | Ion-exchanged water | g | 175 | 175 | 175 |
| Nitrogen flow time | | min | 210 | 180 | 195 |
| Polymer characteristics | Content of end structure (I) | % by mass | 3.9 | 3.9 | 3.9 |
| | Content of end structure (II) | % by mass | 1.1 | 0.4 | 0.4 |
| | Weight average molecular weight (Mw) | ten thousand | 2.4 | 2.4 | 2.4 |
| | Number average molecular weight (Mn) | ten thousand | 1.1 | 1.1 | 1.1 |
| | Mw/(I) | × 10² | 62.6 | 62.6 | 62.6 |
| | Amino end group [NH₂] | mol/t | 19 | 19 | 19 |
| | Melting point (Tm) | °C | 220 | 260 | 221 |
| | Relative viscosity (ηr) | - | 1.83 | 1.83 | 1.83 |
| | Melt viscosity | Pa• s | 5.8 | 5.9 | 5.7 |
| Molding processability | Melting point (Tm) + 0°C. | - | ○ | ○ | ○ |
| | Melting point (Tm) + 5°C | - | ○ | ○ | ○ |
| | Melting point (Tm) + 10°C | - | ○ | ○ | ○ |
| Molded article | Continuous phase with particle diameter of 10 nm or more and 50 nm or less | - | ○ | ○ | ○ |
| Mechanical strength | Flexural strength | MPa | 111 | 113 | 91 |
| | Flexural modulus | GPa | 2.6 | 4.1 | 2.1 |
| | Charpy impact value | KJ/m² | 4.8 | 4.2 | 40.3 |

Comparison of Examples 1 to 22 with Comparative Examples 1 to 10 shows that when the content of an end structure represented by the general formula (I) is in a specific range, the melt viscosity is in a specific range, and the ratio of a weight average molecular weight Mw in a specific range to the content [% by mass] of the end structure represented by the general formula (I) (ratio of weight average molecular weight Mw/content of end structure represented by general formula (I)) is in a specific range, it is possible to achieve both excellent molding processability and excellent mechanical strength of a molded article.

Comparison of Example 4 with Example 14 shows that when the content of the end structure represented by the general formula (II) is in a specific range, thermal decomposition of an end structure represented by the general formula (I) can be suppressed at retention during molding processing, and therefore excellent mechanical strength can be exhibited.

Comparison of Examples 1 to 19 with Comparative Examples 3 to 5, 7 to 9 and 11 shows that when the average particle diameter of dispersed phases formed by an end structure represented by the general formula (I) is more than 10 nm and less than 50 nm, the mechanical strength of the molded article can be improved.

Comparison of Examples 1 to 19 with Comparative Examples 1, 2, 6, 7 and 10 shows that when the melt viscosity is 8 Pa·s or less, excellent molding processability is exhibited.

Comparison of Examples 9 and 10 with Example 12 shows that when the weight average molecular weight Mw is 18,000 or more, impact resistance can be further improved.

Comparison of Example 2 with Example 15 shows that when the weight average molecular weight Mw is 30,000 or less, molding processability can be further improved.

Comparison of Examples 4 and 5 with Examples 13 and 16 shows that when the amount of amino terminal groups is 10 to 80 mol/t, mechanical strength can be further improved.

### INDUSTRIAL APPLICABILITY

Molded articles obtained by molding the end modified polyamide resin of the present invention can be used as, for example, resin molded articles such as electric components, electronic device components, automobile components and machine components, fibers for clothing and industrial materials, and films for packaging materials and magnetic recording.

## Claims

1. An end modified polyamide resin having an end structure represented by the following general formula (I), wherein a content of the end structure represented by the following general formula (I) is 1 to 10% by mass based on 100% by mass of the end modified polyamide resin, a ratio of a weight average molecular weight Mw to the content [% by mass] of the end structure represented by the following general formula (I) (ratio of weight average molecular weight/content of end structure represented by the following general formula (I)) is 6,000 or more and 20,000 or less, and a melt viscosity is 0.1 Pa·s or more and 8 Pa·s or less at a temperature higher than a melting point by +60°C and a shear rate of 9728 sec⁻¹:
-X-(R¹-O)ₘ-R² (I)
wherein m represents 2 to 100; R¹ represents a divalent hydrocarbon group having 2 to 10 carbon atoms, and R² represents H or a monovalent organic group; -X- represents -NH-, -N(CH₃)-, -(C=O)- or -CH₂-CH(OH)-CH₂-O-; and m R¹s in the general formula (I) may be the same or different.

2. The end modified polyamide resin according to claim 1, wherein the end modified polyamide resin further contains 0.1 to 5% by mass of an end structure represented by the following general formula (II).
-Y-R³ (II)
wherein R³ represents a monovalent hydrocarbon group having 1 to 30 carbon atoms; and -Y- in the general formula (II) represents -(C=O)- when X in the general formula (I) is-NH- or -N(CH₃)-, Y in the general formula (II) represents-NH- or -N(CH₃)- when X in the general formula (I) is-(C=O)-.

3. The end modified polyamide resin according to claim 1 or 2, wherein in the general formula (I), R² is a monovalent hydrocarbon group having 1 to 30 carbon atoms.

4. The end modified polyamide resin according to any one of claims 1 to 3, wherein when observed with an electron microscope, a cross-section of a molded article including the end modified polyamide resin has continuous phases formed by a main chain of the end modified polyamide resin and the non-end modified polyamide resin, and dispersed phases formed by the end structure represented by the general formula (I), and the dispersed phases have an average particle diameter of 10 nm or more and 50 nm or less.

5. The end modified polyamide resin according to any one of claims 1 to 4, wherein the end modified polyamide resin contains an amino end group in an amount of 10 to 80 [mol/t].

6. The end modified polyamide resin according to any one of claims 1 to 5, wherein the weight average molecular weight Mw is 18,000 to 30,000.

7. A molded article including the end modified polyamide resin set forth in any one of claims 1 to 6.
